# EUROPEAN PATENT APPLICATION

(11) **EP 4 850 785 A1**
(43) Date of publication of application: **09.12.2026**
(21) Application number: 24922241.5
(22) Date of filing: 31.01.2024
(51) Int. Cl.: B01D 53/04, B01D 53/62, B01J 20/28

(54) **HONEYCOMB STRUCTURE, MANUFACTURING METHOD THEREFOR, AND CARBON DIOXIDE RECOVERY DEVICE**

(71) Applicant: NGK Corporation, Nagoya-shi, Aichi 467-8530 (JP)
(72) Inventor: KAKO,Tatsuya, Nagoya-shi, Aichi 467-8530 (JP); ONO,Mitsuharu, Nagoya-shi, Aichi 467-8530 (JP); NAKASHIMA,Takuya, Nagoya-shi, Aichi 467-8530 (JP); INOUE,Daichi, Nagoya-shi, Aichi 467-8530 (JP); ITO,Hiroaki, Nagoya-shi, Aichi 467-8530 (JP); KIMURA,Ryota, Nagoya-shi, Aichi 467-8530 (JP); SUGIHARA,Yuki, Nagoya-shi, Aichi 467-8530 (JP)
(74) Representative: MERH-IP Matias Erny Reichl Hoffmann Patentanwälte PartG mbB
(86) International application number: PCT/JP2024/003159
(87) International publication number: WO 2025/163833

(57) **Abstract**

A honeycomb structure configured to adsorb carbon dioxide comprises 20 to 53% by mass of a solvent.

## Description

### [Technical Field]

The present invention relates to a honeycomb structure and a method for producing the same, as well as a carbon dioxide capture device.

### [Background Art]

To realize a decarbonized society, there is a growing need for technologies to capture and utilize carbon dioxide (which may, hereinafter, be referred to as "CO₂") from the atmosphere and exhaust gases. As a representative conventional CO₂ capture technology, a technology for adsorbing CO₂ from the atmosphere (DAC: Direct Air Capture) has been developed. There are several types of DAC, including liquid absorption, membrane separation, and solid adsorption methods. Among these, in the solid adsorption method, it is common to support CO₂ adsorption (absorption) materials on a substrate. Honeycomb structures, which have a proven track record in the purification of automotive exhaust gases and the like, are expected to serve as substrates for the solid adsorption method.

Conventional honeycomb structures are typically produced by extruding a kneaded material obtained by kneading a forming mixture containing ceramic raw materials, water, and binders to form a honeycomb formed body, followed by heat treatment such as firing (Patent Literature 1). However, heat treatments such as firing require a large amount of energy, and in many cases, CO₂ is generated due to the combustion of hydrocarbon fuels. Furthermore, if an organic binder is used, additional CO₂ is generated when it burns during firing.

Patent Literature 2 describes a honeycomb ceramic substrate for CO₂ capture. This honeycomb ceramic substrate for CO₂ capture includes a honeycomb ceramic substrate having porous partition walls, a plurality of inorganic support particles located within pores of at least one of the porous partition walls, and an organic CO₂ sorbent supported by at least one of the inorganic support particles. This honeycomb ceramic substrate for CO₂ capture is produced through a heat treatment at elevated temperature. Specifically, it is produced by bringing a honeycomb ceramic substrate obtained through a forming step and a firing step into contact with a support precursor slurry, calcining the substrate at a temperature of from approximately 100°C to approximately 600°C for a period of from approximately 1 hour to approximately 10 hours, further bringing it into contact with an organic CO₂ sorbent, and finally drying it at a temperature of from approximately 50°C to approximately 100°C.

Under this background, techniques for producing honeycomb structures without firing are also known. Patent Literature 3 describes a honeycomb substrate having a plurality of partition walls extending in an axial direction from an inlet end to an outlet end, thereby forming a plurality of flow channels, wherein an amine polymer having functional structural unit groups capable of absorbing CO₂ is dispersed in the inorganic powder component of the partition walls of the honeycomb substrate, the honeycomb substrate comprising a mixture of an inorganic powder component and an organic binder. This honeycomb substrate is formed by a method including: dry-blending an inorganic oxide powder component and an organic binder into a mixture; adding a solution of an amine polymer and a solvent to the mixture to form a precursor; mulling the precursor; extruding the mulled precursor to form a consolidated monolith having a plurality of partition walls extending in an axial direction from an inlet end to an outlet end, thereby forming a plurality of flow channels; and drying the consolidated monolith to remove the solvent therefrom, thereby forming an absorbent structure for CO₂ capture.

### [Citation List]

### [Patent Literature]

[PTL 1] Japanese Patent Application Publication No. 2020-019690 A
[PTL 2] Japanese Patent Application Publication No. 2018-538137 A
[PTL 3] Japanese Patent Application Publication No. 2015-508018 A

### [Summary of Invention]

### [Technical Problem]

The honeycomb substrate described in Patent Literature 3 is produced without undergoing a firing step at a higher heating temperature, thereby reducing the amount of carbon dioxide generated during production.

However, since the honeycomb substrate described in Patent Literature 3 removes the majority of the solvent (approximately 80 to 95%) during the drying step, the reduction in carbon dioxide generated during production cannot be considered sufficient. Furthermore, when a method is applied to desorb the adsorbed carbon dioxide using a solvent (e.g., heated steam), the honeycomb substrate will contain the solvent, resulting in wasted energy during drying. Moreover, removing most of the solvent during the drying step makes the honeycomb substrate prone to defects such as cracks. On the other hand, if the honeycomb substrate is not sufficiently dried, its strength will decrease.

The present invention has been made to solve the above-mentioned problems, and an object of the present invention is to provide a honeycomb structure that generates less carbon dioxide during production and ensures strength while suppressing defects such as cracks during drying, and a method for producing the same, as well as a carbon dioxide capture device.

### [Solution to Problem]

As a result of intensive studies for honeycomb structures capable of adsorbing carbon dioxide, the inventors have found that the above-mentioned problems can be solved by controlling a proportion of a solvent in the honeycomb structure within a specific range, and thus completed the present invention. Specifically, the present invention is exemplified as follows.
[1] A honeycomb structure configured to adsorb carbon dioxide, wherein the honeycomb structure comprises 20 to 53% by mass of a solvent.
[2] The honeycomb structure according to [1], wherein the solvent is water.
[3] The honeycomb structure according to [1] or [2], wherein the honeycomb structure has a plurality of cell channels passing through the interior and defined by partition walls, and
   the partition walls comprise a carbon dioxide adsorbent, an organic binder, and an inorganic binder.
[4] The honeycomb structure according to [3], wherein the carbon dioxide adsorbent is dispersed in the partition walls.
[5] The honeycomb structure according to [3] or [4], wherein the carbon dioxide adsorbent is a solid organic compound having at least one amino group.
[6] The honeycomb structure according to any one of [1] to [5], wherein the honeycomb structure has a carbon dioxide adsorption capacity of 0.10 mol/kg or more.
[7] The honeycomb structure according to any one of [1] to [6], wherein the honeycomb structure has an open area ratio of 60% or more.
[8] A method for producing a honeycomb structure, the method comprising:
   a kneaded material preparation step of kneading a forming raw material comprising a solvent, a carbon dioxide adsorbent, an organic binder, and an inorganic binder to prepare a kneaded material;
   a forming step of forming the kneaded material into a honeycomb formed body, wherein the honeycomb formed body has a plurality of cell channels passing through the interior and defined by partition walls; and
   a drying step of drying the honeycomb formed body so that an amount of the solvent in the honeycomb formed body is 20 to 53% by mass.
[9] The method for producing a honeycomb structure according to [8], wherein the solvent is water.
[10] The method for producing a honeycomb structure according to [8] or [9], wherein the carbon dioxide adsorbent is a solid organic compound having at least one amino group.
[11] The method for producing a honeycomb structure according to any one of [8] to [10], wherein a content of the carbon dioxide adsorbent in the forming raw material excluding the solvent is 40 to 94% by mass, a content of the inorganic binder in the forming raw material excluding the solvent is 3 to 50% by mass, and a content of the organic binder in the forming raw material excluding the solvent is 3 to 20% by mass.
[12] The method for producing a honeycomb structure according to any one of [8] to [11], wherein no firing is performed after the drying step.
[13] A carbon dioxide capture device comprising one or more of the honeycomb structures according to any one of [1] to [7].

### [Advantageous Effects of Invention]

According to the present invention, it is possible to provide a honeycomb structure that generates less carbon dioxide during production and ensures strength while suppressing defects such as cracks during drying, and a method for producing the same, as well as a carbon dioxide capture device.

### [Brief Description of Drawings]

[Fig. 1] Fig. 1 is a schematic perspective view of a honeycomb structure according to one embodiment of the present invention.
[Fig. 2] Fig. 2 is a schematic cross-sectional view of a honeycomb structure according to one embodiment of the present invention, which is parallel to a height direction (extending direction of cells).
[Fig. 3] Fig. 3 is a view schematically illustrating a method for measuring a hardness of a kneaded material using a hardness tester.
[Fig. 4] Fig. 4 is an enlarged view illustrating a shape and dimensions of a tip of the hardness tester.
[Fig. 5] Fig. 5 is a graph showing spring characteristics of a spring material used in the hardness tester.

### [Description of Embodiments]

The honeycomb structure of the present invention contains 20 to 53% by mass of a solvent and is capable of adsorbing carbon dioxide. Because the honeycomb structure of the present invention, having such a configuration, contains a larger amount of solvent than conventional honeycomb structures, it is possible to reduce the load on the drying step and enhance the effect of reducing carbon dioxide generated during production. Furthermore, since the amount of solvent removed during the drying step is lower, defects such as cracks during drying can be suppressed. Moreover, because the solvent content is controlled within a predetermined range, the strength of the honeycomb structure can also be ensured. The honeycomb structure of the present invention, having these characteristics, is highly practical as a product for adsorbing carbon dioxide from the atmosphere and could contribute significantly to the realization of the decarbonized society.

Hereinafter, embodiments of the invention will be specifically described with reference to the drawings. It should be understood that the invention is not limited to the following embodiments, and those which have appropriately added changes, improvements and the like to the following embodiments based on knowledge of a person skilled in the art without departing from the spirit of the invention fall within the scope of the invention.

### (1. Honeycomb Structure)

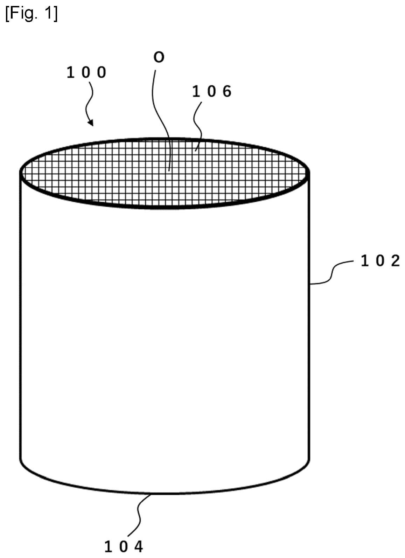

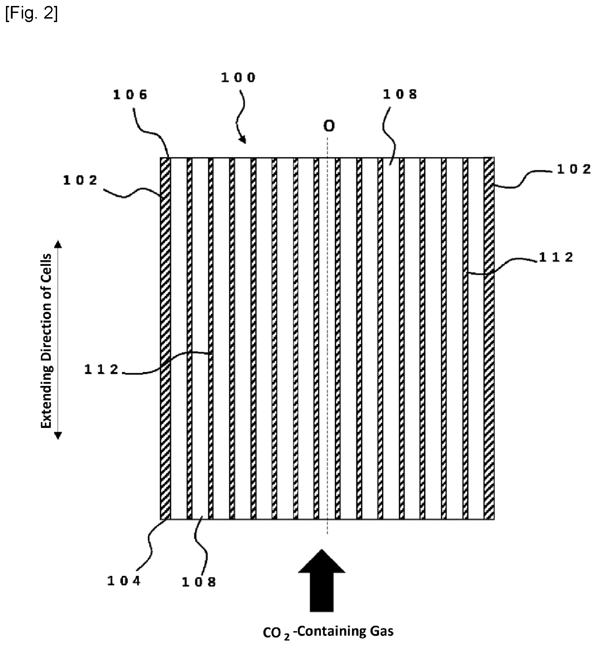

Fig. 1 shows a schematic perspective view of a honeycomb structure according to an embodiment of the present invention. Fig. 2 shows a schematic cross-sectional view of the honeycomb structure shown in Fig. 1, which is parallel to a height direction (extending direction of cells).

As shown in Figs 1 and 2, the honeycomb structure 100 includes a plurality of cell channels that pass through the interior and are defined by partition walls 112. Specifically, the honeycomb structure 100 includes an outer peripheral wall 102 and partition walls 112 disposed on an inner peripheral side of the outer peripheral wall 102, the partition walls 112 extending from a first end face 104 to a second end face 106, and defining a plurality of cells 108 to form fluid flow paths (cell channels). The plurality of cells 108 are arranged in parallel with one another. The honeycomb structure 100 is of a flow-through type in which both ends of each cell 108 open toward the first end face 104 and the second end face 106. When a CO₂-containing gas, such as atmospheric air, flows in from the first end face 104 where the inlets of the plurality of cells 108 are located, CO₂ is adsorbed as the gas passes through the plurality of cells 108, and a gas with a reduced CO₂ concentration flows out from the second end face 106 where the outlets of the plurality of cells 108 are located.

The end face shape of the honeycomb structure 100 is not particularly limited, but it may, for example, be a round shape such as circular, elliptical, racetrack and oblong shapes; a polygonal shape such as triangular and rectangular shapes; and any other irregular shapes. The overall external shape of the honeycomb structure 100 is typically a pillar shaped body. The honeycomb structure 100 shown in FIG. 1 has a circular end face shape, and has a cylindrical shape as a whole.

When the honeycomb structure 100 is the pillar shaped body, its height (the length from the first end face 104 to the second end face 106) is not particularly limited and may be set appropriately depending on the application and required performance. There are also no particular limitations on the relationship between the height of the honeycomb structure 100 and the maximum diameter of each end face (referring to the longest diameter passing through the center of gravity of each end face of the honeycomb structure 100). Therefore, the height of the honeycomb structure 100 may be longer than the maximum diameter of each end face, or the height of the honeycomb structure 100 may be shorter than the maximum diameter of each end face.

The length of the honeycomb structure 100 in the extending direction of the cells 108 (the height direction) is not particularly limited. However, while a longer length can increase an amount of CO₂ adsorbed, an excessively long length results in greater pressure loss. Therefore, this length is preferably 20 to 350 mm, more preferably 20 to 300 mm, and still more preferably 20 to 250 mm.

The maximum diameter of each end face of the honeycomb structure 100 is not particularly limited. However, while a larger maximum diameter can increase the amount of CO₂ adsorbed, an excessively large diameter increases production difficulty. Therefore, the maximum diameter is preferably 20 to 450 mm, more preferably 20 to 400 mm, and still more preferably 20 to 350 mm.

The honeycomb structure 100 contains a solvent. Specifically, the outer peripheral wall 102 and the partition walls 112 forming the honeycomb structure 100 contain a solvent.

The solvent is not particularly limited, and water, or a mixed solvent of water and an organic solvent such as alcohol, may be used. Among these, water is particularly suitable.

The solvent content in the honeycomb structure 100, i.e., in the outer peripheral wall 102 and the partition walls 112 forming the honeycomb structure 100, is 20 to 53% by mass, preferably 23 to 50% by mass, and more preferably 27 to 40% by mass. By controlling the content to such a range, carbon dioxide generated during production can be reduced, and strength can be ensured while suppressing cracking during drying.

The solvent content in the honeycomb structure 100 can be measured as follows. First, a sample cut from the honeycomb structure 100 to any size is prepared and placed in a drying oven set to 70 to 100°C for at least 20 minutes to completely dry the sample. By measuring the mass of the sample before and after drying, the solvent content in the honeycomb structure can be calculated using the following equation: 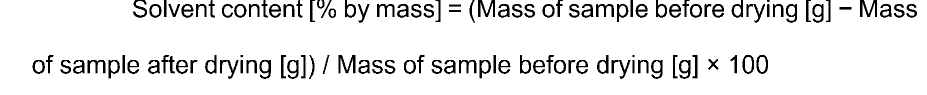 Solvent content [% by mass] = (Mass of sample before drying [g] - Mass of sample after drying [g]) / Mass of sample before drying [g] × 100

The honeycomb structure 100 can adsorb carbon dioxide. Methods for making the honeycomb structure 100 that can adsorb carbon dioxide are not particularly limited, but, for example, a carbon dioxide adsorbent may be incorporated into the honeycomb structure 100, or a coating film of a carbon dioxide adsorbent may be formed on the surface of the honeycomb structure 100. Among these, from the viewpoint of CO₂ adsorption capacity, it is preferable to incorporate a carbon dioxide adsorbent into the honeycomb structure 100.

The partition walls 112 forming the honeycomb structure 100 may further contain a carbon dioxide adsorbent, an organic binder, and an inorganic binder. Furthermore, the outer peripheral wall 102 forming the honeycomb structure 100 may also contain a carbon dioxide adsorbent, an organic binder, and an inorganic binder, similar to the partition walls 112. Each of the carbon dioxide adsorbent, the organic binder, and the inorganic binder may be used alone or in a combination of two or more types.

It is preferable that the carbon dioxide adsorbent be dispersed in the partition walls 112. Similarly, it is preferable that the carbon dioxide adsorbent be dispersed in the outer peripheral wall 102. By dispersing the carbon dioxide adsorbent in the partition walls 112 and the outer peripheral wall 102 in this manner, the amount of CO₂ adsorbed can be increased.

The carbon dioxide adsorbent is not particularly limited and may be any known adsorbents. Among these, the carbon dioxide adsorbent is preferably a solid organic compound having one or more selected from amino groups (-NH₂, -NHR, -NRR' in which R and R' represent organic groups). While it is not intended to limit the present invention by any theory, solid organic compounds having amino groups can adsorb CO₂ by reacting with CO₂ to form carbamates or bicarbonates.

From the perspective of water resistance, it is desirable for the solid organic compound having an amino group(s) to be water-insoluble. Furthermore, the solid organic compound having an amino group may have any one of -NH₂, -NHR, or -NRR' in which R and R' represent organic groups, or may have a combination of two or more of these. Among amino groups, particularly a primary amine (-NH₂) is preferably contained as a functional group. It is also preferable that the solid organic compound having an amino group(s) contain an aromatic ring.

Specific examples of the solid organic compounds having amino groups include weakly basic anion exchange resins having amino groups. Therefore, for example, a solid organic compound having an amino group(s) may contain one or more selected from a styrene-based divinylbenzene polymer having an amino group(s) (e.g., a copolymer of styrene and divinylbenzene) and an acrylic-based divinylbenzene polymer having an amino group(s) (e.g., a copolymer of one or both of acrylic acid and methacrylic acid with divinylbenzene).

From the perspective of CO₂ adsorption performance, the exchange capacity of the weakly basic anion exchange resin is preferably 0.6 meq/mL or more, more preferably 1.0 meq/mL or more, and still more preferably 1.4 meq/mL or more. The exchange capacity of the weakly basic anion exchange resin is determined, according to the tap method, by treating 10 mL of the ion exchange resin with hydrochloric acid, and then measuring an amount of chloride ions eluted when excess hydrochloric acid is washed with ethanol and ammonia water is caused to flow.

The content of the solid organic compound having an amino group(s) in the partition walls 112 (and, if necessary, the outer peripheral wall 102) is not particularly limited, but, from the viewpoint of achieving a good balance among CO₂ adsorption performance, crack suppression during drying, and water resistance, it is preferably 24 to 75% by mass, more preferably 25 to 70% by mass, and still more preferably 30 to 60% by mass.

Examples of the organic binder include methylcellulose, hydroxypropyl methylcellulose, hydroxyethyl cellulose, hydroxypropyl cellulose, carboxymethyl cellulose, polyvinyl alcohol, hydroxyethyl methylcellulose, polyvinyl acetal, polyethylene oxide, polyvinyl butyrate, polybutadiene, methacrylate esters, acrylics, ethyl cellulose, silicone, and polyolefins. These can be used alone or in a combination of two or more. In particular, the use of water-soluble organic binders such as methylcellulose, hydroxypropyl methylcellulose, hydroxyethyl cellulose, hydroxypropyl cellulose, carboxymethyl cellulose, polyvinyl alcohol, hydroxyethyl methylcellulose, polyvinyl acetal, and polyethylene oxide can reduce environmental impact, the risk posed by organic solvent vapors during drying, and production costs.

The content of the organic binder in the partition walls 112 (and, if necessary, the outer peripheral wall 102) is not particularly limited, but, from the viewpoint of achieving a good balance among CO₂ adsorption performance, crack suppression during drying, and water resistance, it is preferably 2 to 9% by mass, and more preferably 3 to 8% by mass.

Examples of the inorganic binder include one or more inorganic binders selected from fibrous and granular types. Among these, fibrous inorganic binders are preferred.

As used herein, the "fibrous" inorganic binder refers to an inorganic binder having an average aspect ratio of 3 or more. As used herein, the "granular" inorganic binder refers to an inorganic binder having an average aspect ratio of less than 3. The average aspect ratio of the inorganic binder is determined using the following procedure. A test specimen of the honeycomb structure 100 is cut to a suitable size, placed in a crucible, and heated in an electric furnace at 500°C to remove organic matter. The remaining inorganic binder is then dispersed on a scanning electron microscope (SEM) sample stage, and the magnification is adjusted so that all 20 inorganic binder particles fit within a single field of view. The longest diameter and shortest diameter of any 20 inorganic binder particles are measured, and the average of the longest diameter divided by the shortest diameter is taken as the average aspect ratio of the inorganic binder. The longest diameter of a single inorganic binder refers to the longest distance between two parallel lines enclosing that inorganic binder in the SEM image. The shortest diameter of a single inorganic binder refers to the shortest distance between two parallel lines enclosing that inorganic binder in the SEM image.

Specific examples of the inorganic binders include clay, diatomaceous earth, layered clay minerals, montmorillonite, hydrotalcite, activated clay, acid clay, hectorite, halloysite, attapulgite, silica, alumina, talc, chlorite, vermiculite, mica, illite, pyrophyllite, sericite, kaolin, sepiolite, boehmite, palygorskite, and bentonite. These can be used alone or in combination of two or more. Furthermore, among these, the inorganic binder preferably contains one or more selected from sepiolite, boehmite, bentonite, silica, kaolin, and talc, and it more preferably contains sepiolite.

The content of the inorganic binder in the partition walls 112 (and, if necessary, the outer peripheral wall 102) is not particularly limited, but from the viewpoint of achieving a good balance among CO₂ adsorption performance, crack suppression during drying, and water resistance, it is preferably 2 to 45% by mass, and more preferably 3 to 40% by mass.

The partition walls 112 (and, if necessary, the outer peripheral walls 102) making up the honeycomb structure 100 may further contain, in addition to the above components, known additives such as surfactants and pore formers, to the extent that they do not impair the effects of the present invention.

The average thickness of the partition walls 112 (and, if necessary, the outer peripheral walls 102) making up the honeycomb structure 100 is not particularly limited, but from the viewpoint of ensuring strength, it is preferably 50 µm or more, more preferably 60 µm or more, and still more preferably 70 µm or more. Furthermore, from the viewpoint of suppressing pressure loss, the average thickness of the partition walls 112 is preferably 600 µm or less, more preferably 550 µm or less, and still more preferably 500 µm or less. Therefore, the average thickness of the partition walls 112 is preferably 50 to 600 µm, more preferably 60 to 550 µm, and still more preferably 70 to 500 µm. As used herein, the thickness of the partition walls 112 is defined as a length of a portion passing through the partition walls 112 of line segments connecting the centers of gravity of adjacent cells 108, as viewed in a cross-section perpendicular to the extending direction of the cells 108. Furthermore, the average thickness of the partition walls 112 refers to an average value of the thicknesses of all partition walls 112 in the honeycomb structure 100.

Although the cell density (number of cells per unit cross-sectional area) of the honeycomb structure 100 is not particularly limited, from the viewpoint of increasing the contact area between the carbon dioxide adsorbent contained in the partition walls 112 and the passing gas, it is preferably 30 cells/cm² or more, more preferably 40 cells/cm² or more, and still more preferably 50 cells/cm² or more. Furthermore, from the viewpoint of ensuring gas flow paths and reducing pressure loss, the cell density is preferably 2,000 cells/cm² or less, more preferably 1,200 cells/cm² or less, and still more preferably 900 cells/cm² or less. Therefore, the cell density is preferably, for example, 30 to 2,000 cells/cm², more preferably 40 to 1,200 cells/cm², and still more preferably 50 to 900 cells/cm². As used herein, the cell density is calculated by dividing the number of cells 108 in the honeycomb structure 100 by the area of one end face of the honeycomb structure 100, excluding the outer peripheral wall 102.

The open area ratio of the honeycomb structure 100 is not particularly limited, but it is preferably 60% or more, more preferably 70% or more, and still more preferably 80% or more. By controlling the open area ratio within such a range, both improvement of CO₂ adsorption performance and suppression of increase in pressure loss can be achieved.

The upper limit of the open area ratio of the honeycomb structure 100 is not particularly limited, but from the viewpoint of ensuring the strength of the honeycomb structure 100, it is preferably 90% or less, more preferably 89% or less, and still more preferably 88% or less.

The open area ratio of the honeycomb structure 100 can be determined by dividing the total area of the cells 108 defined by the partition walls 112 at one end face (the first end face 104 or the second end face 106) by the area of that end face (the total area of the outer peripheral wall 102, the partition walls 112, and the cells 108), and multiplying the resulting value by 100.

The shape of the cells 108 in a cross-section orthogonal to the extending direction of the cells 108 (the height direction of the honeycomb structure 100) is not particularly limited, but it may preferably be rectangular, hexagonal, octagonal, circular, or a combination thereof. Among these, it is preferable that the shape of the cells 108 be rectangular or hexagonal. With such shapes of the cells 108, the pressure loss when fluid flows through the honeycomb structure 100 is reduced.

The honeycomb structure 100 preferably has a carbon dioxide (CO₂) adsorption capacity of 0.10 mol/kg or more, and more preferably more than 0.50 mol/kg. With such an amount of CO₂ adsorbed, the CO₂ adsorption performance can be considered good.

The amount of CO₂ adsorbed can be measured, as follows: First, a cubic sample having 20 mm × 20 mm × 40 mm (length in the extending direction of the cells 108) is cut from the vicinity of the center of the honeycomb structure 100. This sample is then placed in a sealed container, and CO₂ concentration sensors are installed on the inlet and outlet sides of the cells of the sample. Subsequently, as a pretreatment, a nitrogen gas heated to 90 to 100°C is passed through the sample at a flow rate of 1.5 L/min until the CO₂ concentration on the outlet side reaches 0 ppm, and heating is then stopped while continuing to pass the nitrogen gas until the temperature reaches 25°C (room temperature). After reaching 25°C, air at 25°C is passed through the sample at a flow rate of 15 L/min, and the amount of CO₂ adsorbed (mol) until saturation is reached is measured. By dividing the measured amount of CO₂ adsorbed (mol) by the mass of the sample (kg), the amount of CO₂ adsorbed per unit mass of the sample (mol/kg) can be calculated.

### (2. Methods for CO₂ Capture and Desorption)

According to an embodiment of the present invention, a method for capturing and desorbing CO₂ using the honeycomb structure 100 is provided.

Specifically, the method for capturing CO₂ according to an embodiment of the present invention includes passing a target gas containing CO₂ (CO₂-containing gas) through a plurality of cell channels of the honeycomb structure 100, adsorbing the CO₂ in the target gas using a carbon dioxide adsorbent while the target gas passes through the plurality of cell channels, and discharging the target gas with a reduced CO₂ concentration from the honeycomb structure 100.

The target gas is not particularly limited as long as it is a gas containing CO₂, but examples include ambient air (including outdoor air as well as indoor air), factory exhaust gas, ship exhaust gas, and power plant exhaust gas.

Furthermore, the CO₂ desorption method according to an embodiment of the present invention involves passing a desorption gas through the plurality of cell channels of the honeycomb structure 100 onto which CO₂ has been adsorbed, and desorbing CO₂ from the carbon dioxide adsorbent into the desorption gas as the desorption gas passes through the plurality of cell channels.

Here, the desorption gas is not particularly limited as long as it is capable of desorbing CO₂, but steam, for example, may be used. The water vapor may preferably be at an elevated temperature such as 100°C or higher (e.g., 120°C).

### (3. Method for Producing Honeycomb Structure)

A preferred example of the method for producing a honeycomb structure according to an embodiment of the present invention is described below.

The method for producing a honeycomb structure according to an embodiment of the present invention includes: a kneaded material preparation step of kneading a forming raw material containing a solvent, a carbon dioxide adsorbent, an organic binder, and an inorganic binder to prepare a kneaded material; a forming step of forming the kneaded material into a honeycomb formed body, the honeycomb formed body having a plurality of cell channels that pass through the interior of the honeycomb formed body and are defined by partition walls; and a drying step of drying the honeycomb formed body so that a content of the solvent in the honeycomb formed body is 20 to 53% by mass.

### (Kneaded Material Preparation Step)

In the kneaded material preparation step, a forming raw material containing a solvent, a carbon dioxide adsorbent, an organic binder, and an inorganic binder is kneaded to prepare a kneaded material. Examples of the solvent (dispersion medium) include water or a mixed solvent of water and an organic solvent such as alcohol, and in particular, water is suitably used.

From the viewpoint of achieving a good balance among CO₂ adsorption performance, crack suppression during drying, and water resistance, it is preferable that the content of the carbon dioxide adsorbent in the forming raw material excluding the solvent be 40 to 94% by mass, the content of the inorganic binder in the forming raw material excluding the solvent be 3 to 50% by mass, and the content of the organic binder in the forming raw material excluding the solvent be 3 to 20% by mass. Furthermore, it is more preferable that the content of the carbon dioxide adsorbent in the forming raw material excluding the solvent be 40 to 90% by mass, the content of the inorganic binder in the forming raw material excluding the solvent be 3 to 40% by mass, and the content of the organic binder in the forming raw material excluding the solvent be 3 to 18% by mass. Furthermore, it is still more preferable that the content of the carbon dioxide adsorbent in the forming raw material excluding the solvent be 40 to 80% by mass, the content of the inorganic binder in the forming raw material excluding the solvent be 3 to 30% by mass, and the content of the organic binder in the forming raw material excluding the solvent be 5 to 15% by mass.

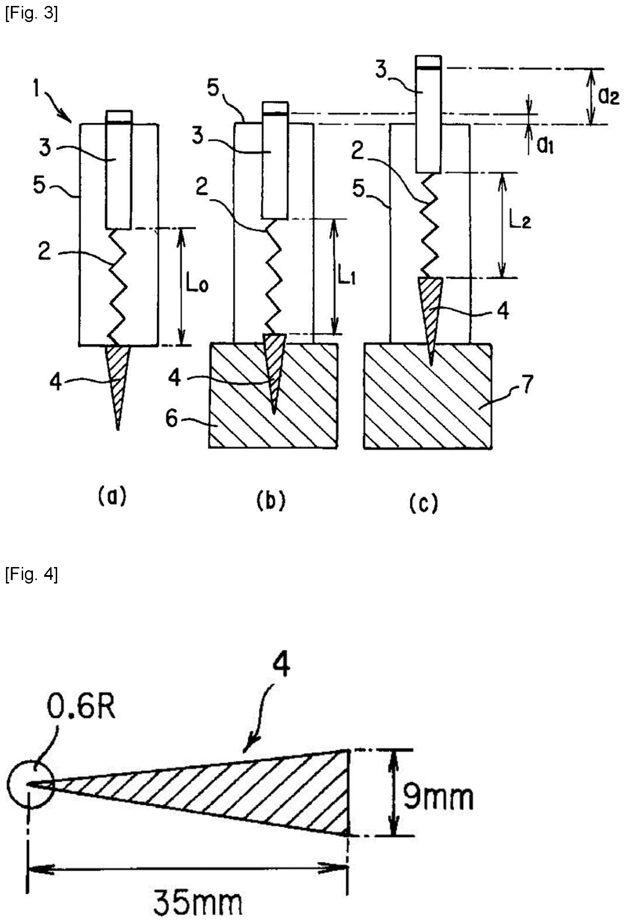

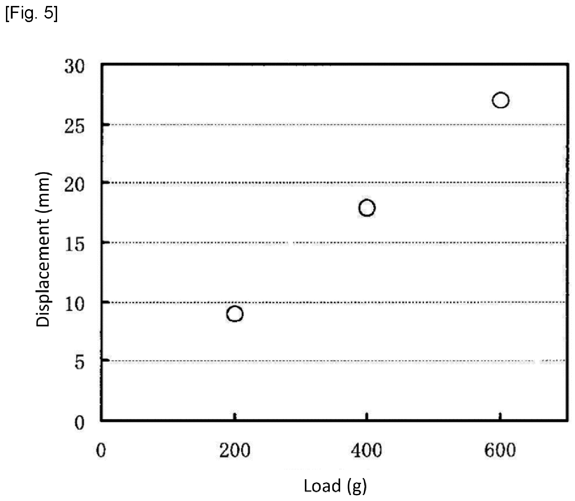

The content of the solvent in the forming raw material is determined so that the kneaded material hardness is suitable for extrusion. The kneaded material hardness is preferably in the range of 14 to 26 mm, more preferably 15 to 25 mm, and still more preferably 16 to 24 mm. In this specification, the kneaded material hardness is measured by the following method. Fig. 3 is a schematic view illustrating the method for measuring the hardness of a kneaded material using a hardness tester; (a) shows the overall view of the hardness tester, (b) shows the measurement state when the kneaded material is soft, and (c) shows the measurement state when the kneaded material is hard. Furthermore, Fig. 4 is an enlarged view showing the shape and dimensions of the tip of the hardness tester. A hardness tester 1 includes a conical tip 4 and a support member 3 connected by a spring member 2, which are housed within a cylindrical sheath 5 (Fig. 3(a)). Fig. 5 is a graph showing spring characteristics of the spring member 2 used. To measure the hardness of the kneaded material, first, a 20 mm × 20 mm × 20 mm cubic sample is taken from the kneaded material. This sample is placed on a flat surface, and a tip 4 of the hardness tester 1 is inserted vertically from above into the kneaded material 6, 7 until a sheath 5 comes into contact with it. The insertion is performed such that a speed of the sheath is 1 mm/s. Then, a length (a1, a2) by which a support member 3 protrudes above the sheath 5 is read 3 seconds after the sheath 5 comes into contact with the kneaded material 6, 7, and a numerical value (mm) at this time is defined as the hardness of the kneaded material 6, 7. Therefore, the larger the value, the higher the hardness of the kneaded material, indicating that it is harder. As used herein, the average value obtained from measurements taken at two arbitrary locations is defined as the hardness measurement value of the kneaded material. It should be noted that L₀, L₁, and L₂ indicate the lengths of the spring member 2. The hardness testers employing this method of hardness measurement are commercially available, and for example, the NGK-type hardness tester (Model No.: NGK-01) manufactured by NGK Insulators, Ltd. can be used.

Although the preferred characteristics, types, and mixing ratios of the carbon dioxide adsorbent have already been described, further details are provided below. It is preferable that the carbon dioxide adsorbent used as a forming raw material be porous. Furthermore, the median diameter (D50) of the carbon dioxide adsorbent, as determined by the volume-based cumulative particle size distribution obtained via the laser diffraction/scattering method, is preferably 200 µm or less, more preferably 100 µm or less, still more preferably 50 µm or less, still more preferably 30 µm or less, and still more preferably 15 µm or less, in order to prevent clogging during extrusion. The median diameter (D50) of the carbon dioxide adsorbent is preferably 0.1 µm or more, more preferably 0.5 µm or more, and still more preferably 1 µm or more, in terms of ease of availability. Therefore, the median diameter (D50) of the carbon dioxide adsorbent is preferably 0.1 to 100 µm, more preferably 0.5 to 50 µm, still more preferably 1 to 50 µm, still more preferably 1 to 30 µm, and most preferably 1 to 15 µm.

Although the preferred properties, types, and mixing ratios of the inorganic binder have already been described, further details are provided below. It is preferable that the inorganic binder used as a forming raw material be porous. Furthermore, the median diameter (D50) of the inorganic binder, as determined by the volume-based cumulative particle size distribution obtained via the laser diffraction/scattering method, is preferably 200 µm or less, more preferably 100 µm or less, still more preferably 50 µm or less, even more preferably 30 µm or less, and particularly preferably 15 µm or less, in order to prevent clogging during extrusion. The median diameter (D50) of the inorganic binder is preferably 0.01 µm or more, more preferably 0.05 µm or more, and still more preferably 0.1 µm or more, in terms of ease of availability. Therefore, the median diameter (D50) of the inorganic binder is, for example, preferably 0.01 to 200 µm, more preferably 0.05 to 100 µm, and still more preferably 0.1 to 100 µm.

As previously described, the preferred properties, types, and mixing ratios of the organic binder have already been described. The water-soluble organic binders are dissolved during kneading. Therefore, there are no particular restrictions on shape or size, and it is sufficient to use organic binders in generally available forms. When using a water-insoluble organic binder, it is dissolved during kneading if an organic solvent is used. Therefore, there are no particular restrictions on shape or size, and it is sufficient to use organic binders in generally available forms.

The kneading of the forming raw material containing the above components may be performed using a conventional kneader, and it is desirable to knead them for the time required for ensuring that each component is uniformly distributed in the kneaded material.

### (Forming Step)

In the forming step, the honeycomb formed body having the plurality of cell channels that pass through the interior of the honeycomb formed body and are defined by partition walls is formed from the kneaded material.

Typically, in the forming step, the honeycomb formed body is extruded, which includes an outer peripheral wall and partition walls disposed on an inner peripheral side of the outer peripheral wall, the partition walls extending from a first end face to a second end face and defining a plurality of cells to form fluid flow paths (cell channels). During extrusion, a die having the desired overall shape, cell shape, partition wall thickness, cell density, and other characteristics may be used.

### (Drying Step)

In the drying step, the honeycomb formed body is dried so that the content of the solvent in the honeycomb formed body is 20 to 53% by mass.

The solvent content in the honeycomb formed body can be controlled by appropriately adjusting the drying time and drying method.

For drying, conventionally known drying methods such as hot-air drying, microwave drying, dielectric drying, reduced-pressure drying, vacuum drying, and freeze drying may be used. Among these, the hot-air drying, the microwave drying, the dielectric drying, or a combination thereof is preferred because they allow the entire honeycomb formed body to be dried rapidly and uniformly. From the viewpoint of suppressing the decomposition of the carbon dioxide adsorbent and the organic binder during drying, it is preferable to dry the honeycomb formed body in an air atmosphere at 50 to 150°C, more preferable to dry the honeycomb formed body in an air atmosphere at 60 to 140°C, and still more preferable to dry the honeycomb formed body in an air atmosphere at 70 to 130°C. The drying time is not particularly limited and may be appropriately adjusted according to the drying temperature.

In the method for producing a honeycomb structure according to an embodiment of the present invention, it is preferable that no firing is performed after the drying step. By not performing firing, decomposition of the carbon dioxide adsorbent and the organic binder caused by firing can be suppressed, thereby ensuring CO₂ adsorption performance and strength.

### (4. Carbon Dioxide Capture Device)

The carbon dioxide capture device according to an embodiment of the present invention includes one or more of the above honeycomb structures 100. Because the carbon dioxide capture device includes the honeycomb structure 100 described above, it exhibits good CO₂ adsorption performance and strength, thereby enhancing the CO₂ capturing effect.

The carbon dioxide capture device according to an embodiment of the present invention may further include a housing for accommodating the honeycomb structure 100. It is preferable that the housing be connected to pipes through which the target gas containing CO₂ and the desorption gas can be fed and discharged. With the carbon dioxide capture device having such a structure, the capture and desorption of CO₂ can be easily achieved.

### [Examples]

The content of the present invention will be described below in detail with reference to Examples, but the present invention is not construed as being limited thereto.

### (1. Raw Materials)

As a carbon dioxide (CO₂) adsorbent, a commercially available, water-insoluble, weakly basic anion exchange resin (a styrene-based divinylbenzene polymer having a primary amine as a functional group and having an exchange capacity of 2.0 meq/mL) was prepared. This ion exchange resin was in the form of porous granules. Furthermore, the median diameter (D50) as determined by the volume-based cumulative particle size distribution measured by the laser diffraction/scattering method was 10 µm.

Commercially available sepiolite, boehmite, colloidal silica, alumina sol, and kaolin were prepared as inorganic binders. Sepiolite was porous and fibrous, while boehmite, colloidal silica, and kaolin were solid and granular, and the alumina sol was solid and fibrous. Furthermore, when the volume-based cumulative particle size distribution was measured using the laser diffraction/scattering method, the median diameter (D50) was 10 µm for sepiolite, 0.1 µm for boehmite, 0.05 µm for colloidal silica, 0.1 µm for alumina sol, and 10 µm for kaolin.

As an organic binder, commercially available methylcellulose was prepared.

Industrial water was prepared as the solvent.

### (2. Production of Honeycomb Structure)

A forming raw material was prepared by combining the components and solvent shown in Table 1. It should be noted that the content percentages of the carbon dioxide adsorbent, inorganic binder, and organic binder in Table 1 refer to their content percentages when the total of these components is taken as 100% by mass (i.e., when the total of the components excluding the solvent is taken as 100% by mass). Furthermore, the amount of solvent was adjusted so that the kneaded material hardness, as measured using an NGK-type hardness tester (Model No.: NGK-01) manufactured by NGK Insulators, Ltd., was 17 mm. The forming raw material was then kneaded for 30 minutes using a vacuum kneader to prepare a cylindrical kneaded material. It should be noted that while colloidal silica is provided as a dispersion with a solid content of 50% by mass and alumina sol is provided as a dispersion with a solid content of 5% by mass, Table 1 lists only the solid content.

**[Table 1]**

| | Content of Components Excluding Solvent (% by mass) | | | | | | |
|---|---|---|---|---|---|---|---|
| | CO₂ Adsorbent | Inorganic Binder | | | | | Organic Binder |
| | | Sepiolite | Bochmite | Colloidal Silica | Alumina Sol | Kaolin | |
| Example 1 | 94 | 3 | -- | -- | -- | -- | 3 |
| Example 2 | 75 | 20 | -- | -- | -- | -- | 5 |
| Example 3 | 40 | 50 | -- | -- | -- | -- | 10 |
| Example 4 | 75 | -- | 20 | -- | -- | -- | 5 |
| Example 5 | 75 | -- | -- | 20 | -- | -- | 5 |
| Example 6 | 75 | -- | -- | -- | 20 | | 5 |
| Example 7 | 75 | -- | -- | -- | -- | 20 | 5 |
| Comp. 1 | 97 | 3 | -- | -- | -- | -- | -- |

Next, the resulting cylindrical kneaded material was formed using an extrusion molding machine equipped with a specific die structure to provide a cylindrical honeycomb formed body in which each cell had a rectangular cross-section perpendicular to the extending direction of the cells. The formability of the honeycomb formed body was evaluated by visually inspecting the honeycomb structure formed during extrusion. The formability was evaluated based on the following criteria. The results of this evaluation are shown in the "Formability" column of Table 3.

Circle: the honeycomb structure was formed without cracks on the partition walls;

Triangle: cracks were observed on the partition walls, but the honeycomb structure was formed;
×: insufficient shape retention; the honeycomb structure could not be maintained.

Next, a honeycomb structure was obtained by drying the obtained honeycomb formed body by microwave drying so that the solvent content reached a predetermined value. The solvent content in the honeycomb structure was adjusted by controlling the drying time.

The honeycomb structure obtained by the above method had circular end faces with a diameter of 60 mm and a height (length in the extending direction of the cells) of 120 mm. Furthermore, the open area ratio was 73.3%, the cell density was 300 cells/cm², and the average thickness of the partition walls was 200 µm.

The honeycomb structures obtained above were evaluated as follows:

### (3. Evaluation of the Honeycomb Structure)

### <Defects>

The honeycomb structures with various solvent contents were visually inspected for defects. Defects were evaluated based on the following criteria. The results of this evaluation are shown in the "Defects" column of Table 2.
Circle: no defects such as cracks;
Triangle: cracks present;
×: defects such as cracks present.

### <Strength>

The strength of the honeycomb structures with various solvent contents was evaluated by attaching an attachment with a diameter of 13.3 mm to the tip of a force gauge (Imada Co., Ltd., DST500N) and applying pressure to the outer peripheral wall of the honeycomb structure until the reading reached 40 N or more. The strength was evaluated based on the following criteria. The results of this evaluation are shown in the "Strength" column of Table 2.
Circle: no change in the shape of the outer peripheral wall of the honeycomb structure;
Triangle: cracks appeared in the outer peripheral wall of the honeycomb structure;
×: the outer peripheral wall of the honeycomb structure cracked and collapsed before reaching 40 N.

### <Water Resistance>

A cube having 25 mm × 25 mm × 25 mm (length in the extending direction of the cells) was cut out from the vicinity of the center of a honeycomb structure with a solvent content of 33% by mass. Moist air at 55°C (humidity of 96% or higher) was passed through the cells of the cut cube at a flow rate of 0.01 m³/s for 1 hour. Subsequently, the condition of the cube was confirmed by visual inspection and dimensional measurement, and evaluated according to the following criteria. The results of this evaluation are shown in the "Water Resistance" column of Table 3.

Circle: when the cube is placed on a horizontal surface with each of its three mutually perpendicular faces as the base and the height is measured (the height being defined as the maximum value from the horizontal surface), the difference between the maximum and minimum values of the height measured in the three directions is less than 2 mm;
Triangle: the difference between the maximum and minimum values of the height measured in the three directions using the above method is 2 mm or more;
×: the honeycomb structure was not maintained during air passing and collapsed

### <CO₂ Adsorption Performance>

The CO₂ adsorption performance was evaluated based on the amount of CO₂ adsorbed. The CO₂ adsorption capacity was calculated by measuring an amount of CO₂ adsorbed (mol) until saturation was reached according to the method described above using a cubic sample having 20 mm × 20 mm × 40 mm (length in the extending direction of the cells 108) cut out from a honeycomb structure with a solvent content of 33% by mass, and then dividing the measured amount of CO₂ adsorbed (mol) by the mass of the sample (kg). The CO₂ adsorption performance was evaluated based on the following criteria. The results of this evaluation are shown in the "CO₂ Adsorption Performance" column of Table 3.
Circle: CO₂ adsorption capacity is more than 0.50 mol/kg;
Triangle: CO₂ adsorption capacity is 0.10 to 0.50 mol/kg;
×: CO₂ adsorption capacity is less than 0.10 mol/kg.

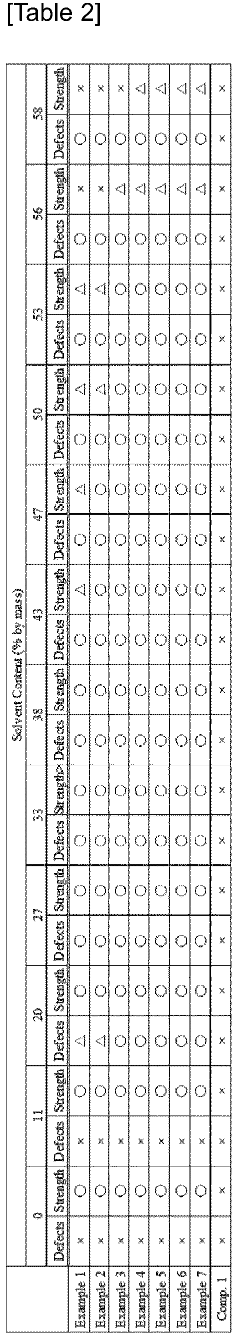

**[Table 3]**

| | Formability | Water Resistance | CO₂ Adsorpti on Performance |
|---|---|---|---|
| Example 1 | ○ | ○ | ○ |
| Example 2 | ○ | ○ | ○ |
| Example 3 | ○ | ○ | ○ |
| Example 4 | ○ | ○ | ○ |
| Example 5 | ○ | △ | ○ |
| Example 6 | ○ | ○ | ○ |
| Example 7 | ○ | △ | ○ |
| Comp. 1 | × | *1 | *1 |
| *1) Measurement was not possible because formability was x | | | |

As shown in Table 2, the honeycomb structures according to Examples 1 to 7, which had a solvent content of 20 to 53% by mass, were free of defects such as cracks and had good strength. Furthermore, as shown in Table 3, the honeycomb structures according to Examples 1 to 7 also had good formability, water resistance, and CO₂ adsorption performance.

In contrast, Comparative Example 1 lacked sufficient shape retention and could not be formed into a honeycomb structure.

As can be seen from the above results, the present invention can provide a honeycomb structure that generates less carbon dioxide during production and ensures strength while suppressing defects such as cracks during drying, and a method for producing the same, as well as a carbon dioxide capture device.

### [Description of Reference Numerals]

1: hardness tester
2: spring material
3: support portion
4: tip
5: sheath
6, 7: kneaded material
a1, a2: projection length
100: honeycomb structure
102: outer peripheral wall
104: first end face
106: second end face
108: cell
112: partition wall

## Claims

1. A honeycomb structure configured to adsorb carbon dioxide, wherein the honeycomb structure comprises 20 to 53% by mass of a solvent.

2. The honeycomb structure according to claim 1, wherein the solvent is water.

3. The honeycomb structure according to claim 1 or 2, wherein the honeycomb structure has a plurality of cell channels passing through the interior and defined by partition walls, and
the partition walls comprise a carbon dioxide adsorbent, an organic binder, and an inorganic binder.

4. The honeycomb structure according to claim 3, wherein the carbon dioxide adsorbent is dispersed in the partition walls.

5. The honeycomb structure according to claim 3, wherein the carbon dioxide adsorbent is a solid organic compound having at least one amino group.

6. The honeycomb structure according to claim 1 or 2, wherein a carbon dioxide adsorption capacity is 0.10 mol/kg or more.

7. The honeycomb structure according to claim 1 or 2, wherein an open area ratio is 60% or more.

8. A method for producing a honeycomb structure, the method comprising:
a kneaded material preparation step of kneading a forming raw material comprising a solvent, a carbon dioxide adsorbent, an organic binder, and an inorganic binder to prepare a kneaded material;
a forming step of forming the kneaded material into a honeycomb formed body, wherein the honeycomb formed body has a plurality of cell channels passing through the interior and defined by partition walls; and
a drying step of drying the honeycomb formed body so that an amount of the solvent in the honeycomb formed body is 20 to 53% by mass.

9. The method for producing a honeycomb structure according to claim 8, wherein the solvent is water.

10. The method for producing a honeycomb structure according to claim 8 or 9, wherein the carbon dioxide adsorbent is a solid organic compound having at least one amino group.

11. The method for producing a honeycomb structure according to claim 8 or 9, wherein a content of the carbon dioxide adsorbent in the forming raw material excluding the solvent is 40 to 94% by mass, a content of the inorganic binder in the forming raw material excluding the solvent is 3 to 50% by mass, and a content of the organic binder in the forming raw material excluding the solvent is 3 to 20% by mass.

12. The method for producing a honeycomb structure according to claim 8 or 9, wherein no firing is performed after the drying step.

13. A carbon dioxide capture device comprising one or more of the honeycomb structures according to claim 1 or 2.
